# EUROPÄISCHE PATENTANMELDUNG

(11) **EP 1 873 699 A1**
(43) Veröffentlichungstag der Anmeldung: **02.01.2008**
(21) Anmeldenummer: 06013494.7
(22) Anmeldetag: 29.06.2006
(51) Int. Cl.: G06N 5/04

(54) **Verfahren zum Lösen eines technischen Problems**

(71) Anmelder: USU AG, 71696 Möglingen (DE)
(72) Erfinder: Huber, Harald, 71686 Remseck/Aldingen (DE)
(74) Vertreter: Lehmann, Judith Christina

(57) **Zusammenfassung**

Bei dem erfindungsgemäßen Verfahren zum Lösen eines technischen Problems mittels einer Dialogstruktur wird die Dialogstruktur unter Berücksichtigung mindestens eines optimierenden Aspekts aus Fragen und Antworten, die zum Lösen des Problems bereitgestellt werden, derart automatisch strukturiert, dass mindestens ein durch die Dialogstruktur festgelegter Dialogpfad bei der Lösung des Problems in einer möglichst kurzen Zeit durchlaufen wird.

## Beschreibung

Die Erfindung betrifft ein Verfahren zum Lösen eines technischen Problems und ein System, das dazu ausgebildet ist, eine zum Lösen eines technischen Problems geeignete Dialogstruktur zu generieren, sowie ein Computerprogramm und ein Computerprogrammprodukt.

In vielen Unternehmen steigen die Anforderungen dafür, Mitarbeiter bzw. Agenten, insbesondere Wartungs- oder Servicekräfte in Dienstleistungszentren, bspw. sog. Service Centers oder Call Centers, zur Bereitstellung von technischen Dienstleistungen mit den notwendigen Informationen zur Fehleranalyse oder Fehlerbeseitigung von technischen Geräten oder Einrichtungen zu versorgen. Hierzu bietet sich an, den Mitarbeitern navigierbare Bäume, bspw. Entscheidungsbäume oder Diagnosebäume, zur Verfügung zu stellen. Mittels derartiger Bäume können mit Kunden Beratungsgespräche geführt werden.

Allerdings ist der Aufwand für die Erstellung und Pflege derartiger Bäume so hoch, dass viele Organisationen sich durch diesen Aufwand von der Nutzung von Entscheidungsbäumen abschrecken lassen.

Mit der vorliegenden Erfindung ist es u.a. möglich, die Erstellung dieser Bäume derart zu automatisieren, dass der Aufwand für die Erstellung sowie für die Pflege der Bäume sinkt.

Bei dem erfindungsgemäßen Verfahren zum Lösen eines technischen Problems mittels einer Dialogstruktur wird die Dialogstruktur unter Berücksichtigung mindestens eines optimierenden Aspekts aus Fragen und Antworten, die zum Lösen des Problems bereitgestellt werden, derart automatisch strukturiert, dass mindestens ein durch die Dialogstruktur festgelegter Dialogpfad bei der Lösung des Problems in einer möglichst kurzen Zeit durchlaufen wird.

Dies kann bedeuten, dass aus einer Vielzahl zur Lösung des Problems denkbarer Fragen und Antworten jene Fragen und Antworten so ausgewählt und miteinander verknüpft werden, dass die Dialogstruktur den mindestens einen kürzesten Dialogpfad bzw. -weg aufweist. Es ist vorgesehen, dass die Dialogstruktur aus gegenseitigen Abhängigkeiten der Fragen und Antworten generiert wird. Daraus ergibt sich, dass mit der Dialogstruktur gegenseitige Abhängigkeiten der Fragen und Antworten beschrieben werden.

Üblicherweise sind für ein beobachtetes bzw. auftretendes Problem mehrere Lösungen denkbar, wobei jede Lösung ausgehend von dem Problem nach einer Abfolge miteinander verknüpfter Fragen und Antworten erreichbar ist. Dabei entspricht jede Abfolge von miteinander verknüpften Fragen und Antworten einer Art Diagnosefindung, wobei eine daraus letztlich resultierende Diagnose mit mindestens einer geeigneten Lösung verknüpft ist. Bei Durchführung des Verfahrens werden die Fragen und Antworten, durch die wiederum Dialogpfade der Dialogstruktur gebildet sind, bei Strukturierung bzw. Generierung der Dialogstruktur derart verknüpft oder verbunden, dass die Dialogpfade bis zum Erreichen jeweils einer Lösung eine möglichst geringe Anzahl von Fragen und Antworten aufweisen.

In Ausgestaltung wird die Dialogstruktur anhand einer Logik als der mindestens eine optimierende Aspekt strukturiert. Dabei werden mit dieser Logik faktische Abhängigkeiten der Lösungen und Fragen sowie eine Reihenfolge der zu stellenden Fragen berücksichtigt.

Als der mindestens eine optimierende Aspekt kann eine Erfolgsquote der Lösung berücksichtigt werden. Der mindestens eine optimierende Aspekt, insbesondere die Erfolgsquote, ist in Ausgestaltung ein zu berechnender Wahrscheinlichkeitsgradient. Somit kann die wahrscheinlichste Lösung unter Berücksichtigung des kürzesten Dialogpfads bestimmt werden. Die Fragen und Antworten werden über die Dialogstruktur derart organisiert, dass in Abhängigkeit der Erfolgsquote bei dem mindestens einen Dialogpfad bis zum Erreichen einer Lösung eine minimale Anzahl von Fragen zu beantworten ist.

Des weiteren können mit dem mindestens einen optimierenden Aspekt Kosten der Lösung berücksichtigt werden. Diesbezüglich wird typischerweise die kostengünstigste Lösung vorrangig ausgewählt, teuere Lösungen rutschen innerhalb des Dialogpfads nach hinten. Gerade finanzielle Aspekte können durch Fragen, die als Kontrollfragen ausgebildet sind, berücksichtigt werden.

Mit dem Verfahren ist es auch möglich, dass die Dialogstruktur bei einer Generierung auf Basis automatisch gesammelter Lerndaten bspw. Wahrscheinlichkeiten automatisch optimiert wird und damit eine optimale Dialogstruktur, die kürzeste zu Lösungen führende Dialogpfade aufweist, bereitgestellt wird.

Ein Maß für eine Wahrscheinlichkeit kann sich bei Einsatz der Dialogstruktur ändern und somit weiterentwickeln. Ein derartiger Einsatz ergibt sich bei Verwendung eines mit der Dialogstruktur gebildeten Entscheidungsbaums und/oder einer daraus entwickelten Dialogführung. Bei mehrmaligem Einsatz kann sich herausstellen, dass bestimmte Dialogpfade und/oder Fragen häufiger als andere genutzt werden und somit eine höhere Wahrscheinlichkeit für eine erfolgreiche Lösung des Problems besitzen. Bei einer automatischen, selbstlernenden Umstrukturierung der Dialogstruktur können diese Dialogpfade und/oder Fragen bevorzugt berücksichtigt werden.

In weiterer Ausgestaltung wird mit der Dialogstruktur mindestens ein Entscheidungsbaum, der miteinander verbundene Fragen und Antworten zum Lösen des Problems umfasst, bereitgestellt. Dieser Entscheidungsbaum weist üblicherweise an einer Wurzel das Problem und eine damit verbundene erste Frage auf. Antworten auf diese erste Frage bilden erste Äste des Entscheidungsbaums. Verzweigungen dieser Äste werden durch weitere Fragen gebildet, die während einer Entscheidungsfindung auf den Antworten vorheriger Fragen basieren. Der Entscheidungsbaum kann beliebig verzweigt sein, an den Enden des Entscheidungsbaums stehen mögliche Lösungen des Problems. Der mit dem erfindungsgemäßen Verfahren bereitgestellte Entscheidungsbaum weist kurze Dialogpfade entlang weniger Äste und Verzweigungen auf, so dass Lösungen schnell erreicht werden.

Außerdem kann anhand der Dialogstruktur eine Dialogführung zum Lösen des Problems bereitgestellt werden. Über diese Dialogführung kann ein Gespräch zwischen einem Kunden, der eine Lösung für ein Problem sucht, und einem Mitarbeiter eines Dienstleistungszentrums effektiv und zeitsparend geführt werden.

Dem Verfahren kann zum Beheben eines Defekts an einer Einrichtung oder einem Gerät als denkbarem technischen Problem dienen. Es ist auch denkbar, eine Vorgehensweise zur Lösung einer technischen Aufgabe bereitzustellen.

Innerhalb der Dialogstruktur mit dem mindestens einen Dialogpfad sind den Fragen Antworten zugeordnet. Zudem wird in dem Entscheidungsbaum eine Reihenfolge der zu durchlaufenden Fragen festgelegt. Bei einem Ansatz können Fragen mit einer hohen Grenzbeantwortungswahrscheinlichkeit möglichst zu Beginn des mindestens einen Dialogpfads gestellt werden. Derartige Fragen weisen zu einer Lösung mit hoher Wahrscheinlichkeit auf Erfolg. Des weiteren können Fragen, die allgemeiner zu beantworten sind, ebenfalls zu Beginn des mindestens einen Dialogpfads abgelegt werden.

Durch das Verfahren sind über die Dialogstruktur insbesondere automatisch lernende Entscheidungsbäume bereitstellbar, die strukturierte Fragenkataloge zur Behebung von Defekten in technischen Geräten liefern. Die Abhängigkeiten von Fragen und Antworten untereinander bilden innerhalb von Entscheidungsbäumen eine Matrix. Ein optimaler Entscheidungsbaum weist zum Erreichen einer Lösung des Problems eine möglichst kurze Beantwortungszeit auf.

Das erfindungsgemäße System ist dazu ausgebildet, eine zum Lösen eines technischen Problems geeignete Dialogstruktur zu generieren, und dabei die Dialogstruktur unter Berücksichtigung mindestens eines optimierenden Aspekts aus Fragen und Antworten, die zum Lösen des Problems bereitgestellt sind, derart automatisch zu strukturieren, dass mindestens ein durch die Dialogstruktur festgelegter Dialogpfad bei der Lösung des Problems in einer möglichst kurzen Zeit durchlaufen wird.

Das System kann als Komponenten mindestens ein logisches und/oder funktionelles Modul sowie mindestens eine Datenbank aufweisen. Als das mindestens eine Modul kann das System einen sog. Dialog-Stepper aufweisen, der dazu ausgebildet ist, die Dialogstruktur unter Berücksichtigung des mindestens einen optimierenden Aspekts zu generieren. Das mindestens eine Modul kann als Generierungsmodul ausgebildet sein, das dazu ausgebildet ist, einen Entscheidungsbaum grafisch darzustellen. Als weitere Module können eine Telefonanlage, eine Computertelefonie-Integration, ein Computersystem, ein Incident-Management, eine Verarbeitungslogik, ein Modul zur Entscheidungsbaum-Suche und/oder ein Dialogführungsmodul vorgesehen sein. Als die mindestens eine Datenbank kann eine Lösungsdatenbank, eine Fragendatenbank, eine Abhängigkeitsdatenbank, eine Dialoglogikdatenbank, eine Lerndatenbank, eine Entscheidungsbaumdatenbank und/oder eine Kundendatenbank vorgesehen sein.

Mit dem erfindungsgemäßen System sind sämtliche Schritte des erfindungsgemäßen Verfahrens durchführbar. Einzelne Komponenten des erfindungsgemäßen Systems können dabei zur Durchführung mindestens eines Schritts des Verfahrens ausgebildet sein.

Bei Ausführung des Verfahrens können insbesondere durch das System Fragen und Antworten derart automatisch organisiert werden, dass in Abhängigkeit der Erfolgsquote der Lösungen des Problems die notwendige Anzahl Fragen bis zum Finden der passenden Lösung insbesondere im Durchschnitt, d. h. unter zusammenfassender Berücksichtigung mehrerer denkbarer Dialogpfade, minimal ist.

Das System kann in Bezug auf Begriffe und deren Synonyme, wie sie in den Fragen und Antworten erscheinen können, selbstlernend sein. Der Entscheidungsbaum kann über eine grafische Benutzeroberfläche schlüssig generiert und dargestellt werden.

Mögliche Vorgaben zur Ausführung des Verfahrens sind Reihenfolgen der Fragen sowie zu den Fragen zugehörige Antworten. Zusammenhänge von Fragen und Antworten dazu können bspw. über Tabellen dargestellt und rechnergestützt umgesetzt werden, so dass durch das System automatisch die Reihenfolge von Fragen unter Bildung kurzer, effektiver Dialogpfade zusammengestellt bzw. generiert wird.

Abhängigkeiten von Fragen und Antworten können bspw. über Bildung von Gruppen von Fragen bereitgestellt werden. In der Regel sind bestimmte Antworten auf Fragen innerhalb des mindestens einen Dialogpfads unabhängig von einer Position immer verknüpft.

Falls eine Einrichtung oder ein Gerät bzw. ein Endgerät, für dessen Problem mit dem Verfahren eine Lösung zu finden ist, durch ein Element erweitert wird, ist es möglich, eine hierfür bereits erstellte Dialogstruktur bzw. einen bereits erstellten Entscheidungsbaum einfach zu erweitern und somit zu vervollständigen. Ein Beispiel hierfür wäre eine als Netzwerk ausgebildete Einrichtung, die durch einen Drucker und/oder einen Computer erweitert wird.

Die Erfindung betrifft des weiteren ein Computerprogramm mit Programmcodemitteln, um alle Schritte eines erfindungsgemäßen Verfahrens durchzuführen, wenn das Computerprogramm auf einem Computer oder einer entsprechenden Recheneinheit, insbesondere in einem erfindungsgemäßen System, ausgeführt wird.

Die Erfindung betrifft außerdem ein Computerprogrammprodukt mit Programmcodemitteln, die auf einem computerlesbaren Datenträger gespeichert sind, um alle Schritte eines erfindungsgemäßen Verfahrens durchzuführen, wenn das Computerprogramm auf einem Computer oder einer entsprechenden Recheneinheit, insbesondere in einem erfindungsgemäßen System, ausgeführt wird.

Das Verfahren ist in der Regel mit Hilfe eines Computers oder einer entsprechenden Recheneinheit durchführbar, dabei werden durch Strukturierung der Dialogstruktur die mittleren Dialogzeiten innerhalb des Entscheidungsbaums optimiert. Des weiteren können aber auch Aspekte der Reihenfolgenlogik, wie implizite Antworten oder ähnliches, berücksichtigt werden. Hierzu ist nicht erforderlich, dass der Computer typisch menschliche Dialoge oder sachliche Abhängigkeiten kennt.

Es ist in Ausgestaltung vorgesehen, dass durch einen Redakteur nur eine spärlich auszufüllende Entscheidungstabelle erstellt wird, aus der insbesondere mittels einer weiter unten dargestellten Mechanik die Dialogstruktur und darauf basierend der mindestens eine Entscheidungsbaum automatisch erstellt wird.

Im Unterschied zu einem klassifizierenden Entscheidungsbaum, in dem alle Zeilen in jeder Spalte einen Wert haben müssen, ist mit der Dialogstruktur vorgesehen, dass nicht jede Lösung zu allen Fragen eine Aussage machen muss, wodurch wiederum ein Redaktionsaufwand drastisch gesenkt wird.

In Ausgestaltung können der Entscheidungsbaum sowie die Dialogführung dynamisch generiert werden, d. h. dass die Dialogstruktur kontinuierlich neu, Schritt für Schritt erzeugt und/oder ergänzt wird. Des weiteren kann neben einer operativen Dialogführung auch eine grafische Darstellung des Entscheidungsbaums genutzt werden. Daher automatisiert ein zur Durchführung des Verfahrens geeignetes System auch die automatische grafische Erstellung des Entscheidungsbaums.

Es ist demnach vorgesehen, dass die Dialogstruktur unter Berücksichtigung des mindestens einen Aspekts bspw. auch anhand ihrer Logik strukturiert wird, wobei die Logik sowohl die faktische Abhängigkeiten der Lösungen und Fragen, als auch eine Reihenfolge der zu stellenden Fragen, sowie Kosten der Lösung, unbedingte Folgefragen, vorher zu wählende Fragen usw. beinhaltet. Hieraus kann automatisch die Dialogstruktur generiert werden. Es ist zudem möglich, auf Grundideen zurückzugreifen, die beim Aufbau von Entscheidungsbäumen bei Klassifizierungstechniken verwendet werden. Diese werden allerdings mit dem Ziel des möglichst kurzen Dialogpfades abgewandelt. Eine Generierung der Dialogstruktur kann auf Basis automatisch gesammelter Lerndaten, als weitere zu berücksichtigende Aspekte, automatisch optimiert werden, wo eine optimale Dialogstruktur für den Entscheidungsbaum und/oder die Dialogführung sicher gestellt wird.

Bei Ausführung des Verfahrens ist in Ausgestaltung die Berechnung eines Wahrscheinlichkeitsgradienten vorgesehen. Zur Berechnung der damit verbundenen Relevanz einer Lösung liegt folgendes theoretische Modell zu Grunde: Es wird davon ausgegangen, dass die verschiedenen Lösungen eine Lösungswahrscheinlichkeit haben, die sich aus ihrem empirisch festgestellten Erfolg ableitet. Eine Lösung, die 100 mal erfolgreich war ist doppelt so erfolgreich und somit doppelt so relevant wie eine Lösung, die 50 mal erfolgreich war.

Außerdem ist eine Fragenwahl möglich, deren Aufgabe es ist, die Wahrscheinlichkeit maximal zu steigern, die richtige Lösung unter den passenden Lösungen bereitzustellen. Hierbei wird berücksichtigt, dass versucht wird, eine möglichst minimale Anzahl von Schritten, bspw. von Klicks, die die Dialogführung an einem Computer begleiten, zur Ermittlung der passenden Lösung zu benötigen. Ist die Wahrscheinlichkeit pro Schritt maximal, die richtige Lösung zu erwischen, dann ist im Umkehrschluss die Zeit und somit die Anzahl der Klicks, um die richtige Lösung zu erwischen, minimal.

Die Wahrscheinlichkeit kann dann gesteigert werden, wenn das System möglichst viel über eine Frage weiß. Dies kann bedeuten, dass von einer Frage bekannt ist, zu wievielen Lösungen sie in Beziehung bzw. Abhängigkeit steht. Eine Frage, die zu rund der Hälfte der Lösungen eine Beziehung aufweist, dient dem Ziel der Ermittlung der richtigen Lösung mehr als eine Frage, die zu nur vereinzelten Lösungen eine Beziehung aufweist. Demnach ergibt sich die Grenzwahrscheinlichkeit für die Lösungsermittlung durch eine Frage aus dem Anteil der abhängigen Lösungen dieser Frage zu der Gesamtheit der Lösungen. Allerdings ist dabei zu beachten, dass die Lösungswahrscheinlichkeit dann steigt, wenn die entsprechenden Lösungen häufig erfolgreich verwendet wurden.

In die Berechnung des Wahrscheinlichkeitsgradienten geht die Häufigkeit erfolgreicher Lösungen mit ein. Dabei sind allerdings die Kosten zu berücksichtigen. Die Grenzwahrscheinlichkeit einer Frage ergibt sich dann aus der Summe aller Abhängigkeiten (A₁ .. An), wobei gilt: Grenzwahrscheinlichkeit = Summe ((A₁* L₁) .. (An* Lₙ), wobei Li die Lösungswahrscheinlichkeit der Lösung i darstellt. Aᵢ steht für die Abhängigkeit i der Lösung i von der betrachteten Frage. Betrachtet werden in der Regel nur die tatsächlich noch vorhandenen, also noch nicht durch andere Antworten schon ausgeschlossene Lösungen.

Zudem gilt für eine aufwendige Lösung, dass ihre Lösungswahrscheinlichkeit immer als minimal und somit gleich 1 angesehen wird, gleichgültig, wie häufig die Lösung erfolgreich war. Wenn die Lösung eine finale Lösung ist, wird die Abhängigkeit zu dieser Lösung nicht betrachtet.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im folgenden unter Bezugnahme auf die Zeichnung ausführlich beschrieben.

Figur 1 zeigt eine schematische Übersicht eines ersten Ausführungsbeispiels von Modulen eines Systems.

Figur 2 zeigt ein Ausführungsbeispiel eines mittels der Erfindung bereitgestellten Entscheidungsbaums.

Figur 3 zeigt Ausführungsbeispiele für Benutzeroberflächen.

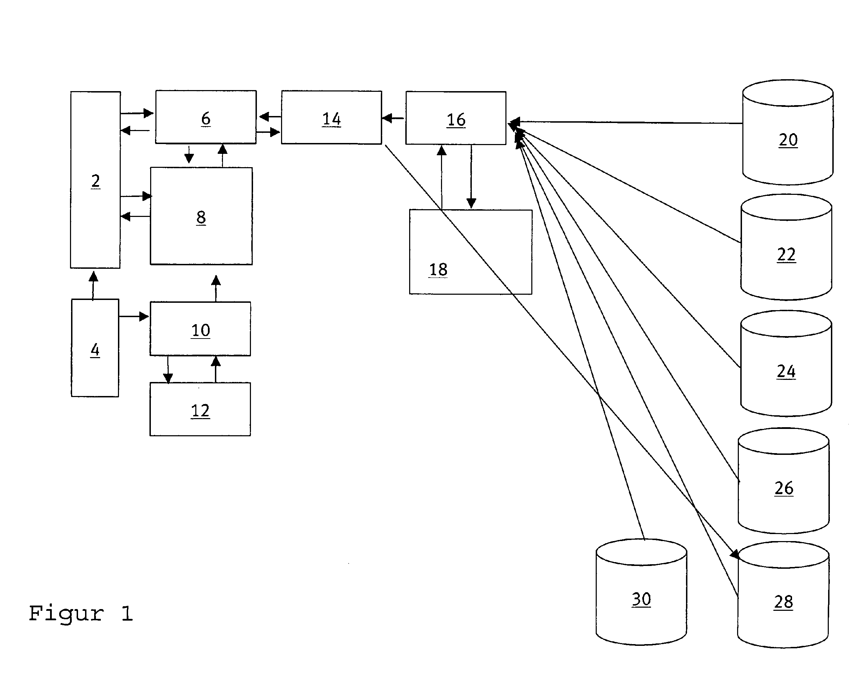

In Figur 1 wird eine schematische Übersicht eines ersten Ausführungsbeispiel eines Systems zur Durchführung bzw. Unterstützung des Verfahrens dargestellt. Das System ist bspw. auch für eine Dialogführung zwischen einem Kunden und einem Mitarbeiter eines Dienstleistungszentrums sowie zur Generierung eines Entscheidungsbaums geeignet.

In dieser Übersicht sind folgende Module dargestellt: Ein Endgerät 2 und somit eine Einrichtung des Kunden, eine Telefonanlage 4, ein Modul zur Entscheidungsbaumsuche 6, ein Modul für ein Ticketsystem bzw. ein Incident-Management 8, ein Modul zur Computertelefonie-Integration 10, ein Kundendatenbank 12, ein Dialogführungsmodul 14, ein Dialog-Stepper 16, sowie ein Generierungsmodul 18 zur grafischen Darstellung.

Außerdem zeigt die schematische Übersicht aus Figur 1 eine Lösungsdatenbank 20, eine Fragendatenbank 22, eine Abhängigkeitsdatenbank 24, eine Dialoglogikdatenbank 26, eine Lerndatenbank 28, sowie eine Entscheidungsbaumdatenbank 30. Die hier schematisch dargestellten Module 2, 4, 6, 8, 10, 12, 14, 16, 18 sowie Datenbanken 20, 22, 24, 26, 28, 30 und ihre jeweiligen Funktionen wurden bereits voranstehend detailliert beschrieben. Durch die Pfeile innerhalb der Übersicht aus Figur 1 werden nunmehr Wechselwirkungen zwischen den einzelnen Modulen 2, 4, 6, 8, 10, 12, 14, 16, 18 und den Datenbanken 20, 22, 24, 26, 28, 30 verdeutlicht.

Mit dem erfindungsgemäßen Verfahren ist es mittels dem in Figur 1 in der Übersicht im Ausführungsbeispiel dargestellten System möglich, einen technischen Defekt, der bei dem Endgerät 2 aufgetreten ist, zu beheben und somit eine technische Lösung für ein Problem dieses Endgeräts 2 zu finden.

Das System zur automatischen Strukturierung bzw. Generierung der Dialogstruktur und somit der Dialogunterstützung weist in der Regel die mit einem Headset ausgestattete Telefonanlage 4 auf. Eine Computertelefonie-Integration 10 ist so gestaltet, dass beim Eintreffen eines Anrufs des Kunden das Computersystem über den eingehenden Anruf und den Kunden informiert wird. Das System umfasst hierzu die Kundendatenbank 12, aus der zu dem eingehenden Anruf und der dort hinterlegten Telefonnummer des Kunden wesentliche Kundendaten ermittelt werden können.

Der Incident-Management 8 des Systems ist so ausgestaltet, dass jeder eingehende Anruf zu einem neuen Ereignis und somit Incident oder Ticket führt. Dieses Ticket wird als Datenobjekt zur Dokumentation des Kundendialogs mit den Fragen des Kunden und den Antworten des Mitarbeiters oder Agenten im Incident-Management 8 festgehalten. Hierbei ist typischerweise folgende Verarbeitungslogik vorgesehen:
- Entweder auf Grund eines Anrufes oder auf Grund einer manuellen Eingabe wird ein Ticket eröffnet und somit ein Dialog gestartet.
- Der Mitarbeiter bzw. Anwender erhält die Möglichkeit, eine Themenbeschreibung einzugeben. Diese wird an das Modul zur Entscheidungsbaumsuche 6 übergeben.
- Wird die Bearbeitung des Incidents beendet, wird das Protokoll der Dialogstruktur des Entscheidungsbaums von dem Modul zur Entscheidungsbaumsuche 6 zurückgegeben und in dem Ticket abgespeichert.

Das Modul zur Entscheidungsbaumsuche 6 zur Unterstützung des Dialogs hat hierbei folgende Logik:
- Zunächst werden passende Entscheidungsbäume zur Eingabe des Anwenders gesucht.
- Wenn ein Entscheidungsbaum gewählt wird, wird das Dialogführungsmodul 14 mit dem gewählten Entscheidungsbaum gestartet.
- Wird der Entscheidungsbaum beendet, wird das Dialogprotokoll an das Incident-Management 8 zurückgegeben.

Das System weist demnach das Dialogführungsmodul 14, das dem Mitarbeiter die dem Kunden zu stellenden Fragen mit den möglichen Antworten vorgibt, auf. Das Dialogführungsmodul 14 und der Dialog-Stepper 16 kommunizieren üblicherweise folgendermaßen:
- Zunächst ruft das Dialogführungsmodul 14 den Dialog-Stepper 16 über die Dialogstruktur mit dem genannten Entscheidungsbaum auf.
- Der Dialog-Stepper 16 übergibt dem Dialogführungsmodul 14 die nächste Frage und die zulässigen Antworten bzw. den nächsten Lösungsvorschlag.
- Das Dialogführungsmodul 14 zeigt dem Mitarbeiter und/oder dem Kunden die Lösung oder die Frage und mögliche Antworten. Danach kann eine passende Antwort gewählt werden.
- Wird eine Frage angezeigt, so wird die gewählte Antwort an den Dialog-Stepper 16 zurückgegeben, der dann die nächste Frage und/oder Lösung ermittelt. Dabei kann auch eine Frage eine Lösung implizieren, falls sie offensichtlich klar zu beantworten ist und somit die Lösung bereits durch die Fragestellung dargelegt ist.
- Wird eine Lösung angezeigt, dann wird sie als vorgeschlagen gekennzeichnet, falls die Lösung als nicht erfolgreich gekennzeichnet wird. Um eine Lösung als erfolgreich oder nicht erfolgreich zu kennzeichnen, kann bspw. eine entsprechende Eingabemodalität, bspw. in Form eines jeweiligen Buttons auf einer Benutzeroberfläche, für einen Anwender vorgesehen werden. Falls die Lösung als erfolgreich gekennzeichnet wird, wird der Dialog beendet. Außerdem wird eine Dokumentation des Dialogs an das Incident-Management 8 als Dokumentation für das Ticket übergeben. In der Lerndatenbank 28 wird festgehalten, dass die Lösung erfolgreich war.

Mittels des Dialog-Steppers 16 als Komponente des Systems wird in Ausgestaltung bei Durchführung des Verfahrens zur Unterstützung des Dialogs der jeweils nächste Dialogschritt ermittelt und an das Dialogführungsmodul 14 übergeben. Dies kann unter Berücksichtigung des Entscheidungsbaums erfolgen. Der Dialog-Stepper 16 kann auch zur Bereitstellung des mindestens einen Entscheidungsbaums verwendet werden und nachfolgend beschriebene Merkmale umfassen.

Eine Logik des Dialog-Steppers 16 wird nachfolgend beschrieben. So beinhaltet der Dialog-Stepper 16 bspw. die Menge aller verfügbaren Lösungen und Fragen, die für die schon bekannten Antworten auf Abhängigkeiten noch gültig sind, also in diesem Fall für nicht vorgeschlagene Lösungen und nicht abgefragte Fragen. Die bekannten Antworten auf Abhängigkeiten können sich auch aus Informationen ergeben, die der Kundendatenbank 12 entnommen wurden. Letztlich können mit den Antworten auf Abhängigkeiten bekannte Attribute des Endgeräts 2 des Kunden, bspw. welche Technik installiert ist oder ob ein Wartungsvertrag vorliegt usw., berücksichtigt werden. Beim Aufruf des Entscheidungsbaums aus der Dialogstruktur kann die Anzahl der noch übrigen Lösungen und/oder Fragen reduziert werden.

Der Dialog-Stepper 16 kann auch Verarbeitungsalternativen und somit eine Wahl von aktuellen Fragen und/oder Lösungen unter Berücksichtigung der bereitgestellten und/oder dynamisch bereitzustellenden Dialogstruktur aufweisen. Sofern der mindestens eine Entscheidungsbaum neu gestartet wird, wird überprüft, ob für die Dialogstruktur und somit auch für den Entscheidungsbaum eine Einstiegsfrage definiert ist. Wenn eine Einstiegsfrage definiert ist, so wird diese als aktuelle Frage gewählt. Dabei kann die Frage möglicherweise bereits auch eine Lösung implizieren.

Zudem kann mit dem Dialog-Stepper 16 überprüft werden, ob Lösungen, für die alle relevanten Abhängigkeiten schon ausgefüllt sind, existieren. Dies gilt natürlich entsprechend der Verarbeitungslogik auch dann, wenn für die vorhergehende Abhängigkeit nur noch eine Wertevariante existiert und diese keine Kontrollfrage darstellt.

Danach ist insbesondere vorgesehen, dass unter Berücksichtigung des mindestens einen optimierenden Aspekts bspw. die Lösung mit der höchsten Erfolgsquote gewählt wird. Falls zwei Lösungen die gleiche Erfolgsquote aufweisen, wird als der mindestens eine optimierende Aspekt die Lösung mit den geringsten relativen Kosten ausgewählt. Nachfolgend kann überprüft werden, ob für die vorangegangene Frage eine unbedingte Folgefrage definiert ist. Falls ja, so wird die unbedingte Folgefrage als aktuelle Frage und/oder Lösung gewählt, sofern die Frage die Lösung implizit nahelegt. Falls nein, so wird die Frage mit dem höchsten Wahrscheinlichkeitsgradienten als der mindestens eine Aspekt gesucht. Dann kann überprüft werden, ob für diese Frage eine vorher zu wählende Frage definiert ist. Falls ja, kann diese Frage als aktuelle Frage gewählt werden. Falls keine sonstigen Fragen verfügbar sind, wird die oder eine finale Lösung als aktuelle Lösung gewählt. Dies entspricht dem Ende der Verarbeitungsalternativen "Wahl der aktuellen Frage".

Durch den Dialog-Stepper 16 kann überprüft werden, ob die Abhängigkeiten zu dieser Frage der noch gültigen Lösungen nur noch einen Wert aufweisen, d.h. ob in den Abhängigkeiten zu dieser Frage der gültigen Lösungen gleiche und somit keine verschiedenen Werte existieren. Es kann zudem überprüft werden, ob es sich bei der Abhängigkeit um eine Kontrollabhängigkeit handelt. Falls ja, dann wird diese Frage als aktuelle Frage gewählt. Falls nein, so wird die Frage als gestellt gekennzeichnet und nach der nächsten Frage und/oder Lösung gesucht, d.h. der Prozess der Fragen-und/oder Lösungsauswahl beginnt von vorne.

Die aktuelle Frage und/oder Lösung wird an das Dialogführungsmodul 14 übergeben. Entsprechend den Antworten des Mitarbeiters bzw. Agenten wird die Abhängigkeit zurückgegeben. Die gestellte Frage wird als gestellt gekennzeichnet. Entsprechend einer Anzahl der noch verfügbaren Lösungen werden implizite Abhängigkeiten ausgefüllt.

In der Lösungsdatenbank 20 des Systems sind die jeweils möglichen Lösungsvorschläge hinterlegt. Die Lösungen sind dabei jeweils einer Dialogstruktur und ggf. einem Entscheidungsbaum zugeordnet, das heißt auch, dass in der Lösungsdatenbank 20 mehrere Entscheidungsbäume hinterlegt werden können. Ebenfalls kann pro Lösung festgehalten werden, welcher Kostenklasse sie angehört. Dabei wird unter drei möglichen Arten von Lösungen unterschieden. Eine Final-Lösung wird erst dann angeboten, wenn alle anderen Lösungen angeboten wurden. Es wird davon ausgegangen, dass es zu dieser Lösung keine zu priorisierende Lösung mehr gibt. Eine aufwendige Lösung wird erst dann vorgeschlagen, wenn alle anderen Lösungen ausprobiert wurden. Faktisch bedeutet das, dass sich die Lösungswahrscheinlichkeit dieser Final-Lösung nicht auf ihre Berücksichtigung bei der Berechnung des Wahrscheinlichkeitsgradienten niederschlägt. Die sonstigen Lösungen werden bspw. durch relative Kosten verglichen. Bspw. ist eine Lösung mit den relativen Kosten von 2 gerade doppelt so aufwendig wie eine Lösung mit den relativen Kosten von 1.

Des weiteren weist das System die Fragendatenbank 20 auf, in der die möglicherweise zu stellenden Fragen hinterlegt sind. Die Fragen sind dabei jeweils einer Datenstruktur und somit einem Entscheidungsbaum zugeordnet, das heißt auch dass in der Fragendatenbank 20 mehrere Entscheidungsbäume hinterlegt werden können.

In der Abhängigkeitsdatenbank 24 als weitere Komponente des Systems sind die logischen Abhängigkeiten zwischen den Lösungen und den Fragen hinterlegt. Die Abhängigkeitsdatenbank 24 kann bspw. folgende Aussage machen: Lösung1 ist gültig, was vorgeschlagen werden kann, wenn Frage1 mit ja beantwortet wurde und Frage2 mit nein. Bevor Lösung2 vorgeschlagen werden darf, muss als Kontrollfrage Frage1 auf jeden Fall gestellt werden.

Eine Dialoglogikdatenbank 26 des Systems kann eine Reihenfolge der zu stellenden Fragen festlegen und bspw. folgende Aussagen machen:
- wenn bspw. Frage1 schon gestellt wurde, kann dies bedeuten, dass Abhängigkeit1 nicht mehr existiert,
- sofern Frage2 gestellt wird, soll sie als vorher zu wählende Frage vor Frage3 gestellt werden,
- Frage4 soll als unbedingte Folgefrage direkt nach Frage5 gestellt werden,
- wenn Frage5 mit a beantwortet wurde, gilt im Rahmen einer impliziten Abhängigkeit für Frage6 b als Antwort.

In der Lerndatenbank 28 werden die Lernergebnisse des Systems festgehalten. Die Aussage dieser Lerndatenbank 28 ist bspw.: Lösung1 wurde 20 mal erfolgreich angewendet, Lösung2 nur 10 mal.

Des weiteren ist mit der Entscheidungsbaumdatenbank 30 vorgesehen, dass zusätzliche Parameter pro Entscheidungsbaum hinterlegt werden können, beispielsweise die Eröffnungsfrage oder Kommentare.

Das Generierungsmodul 18 des Systems ist für die grafische Darstellung der Dialogführung und/oder des Entscheidungsbaums ausgebildet. Die hier beschriebene Erfindung erspart es einem Redakteur somit, einen Entscheidungsbaum zu erstellen, vielmehr wird dieser Entscheidungsbaum automatisch generiert. Allerdings besteht in den meisten Fällen das Interesse, den entstandenen Entscheidungsbaum tatsächlich in einer grafischen Abbildung anschauen zu können.

Diese grafische Darstellung wird durch das Generierungsmodul 18 erzeugt. Die Logik dabei ist die folgende: Der Dialog-Stepper 16 mit dem grafisch darzustellenden Entscheidungsbaum wird aufgerufen. Die zurückgegebene Frage wird als Startknoten aufgetragen. Es wird I = 1 und J(I) = 1 gesetzt. Für alle I, J wird die Frage mit der Antwort J(I) beantwortet. Wenn es keine Antwort mehr gibt, wird I = I-1 gesetzt und zum Ende der Bearbeitung für alle I,J gegangen. Danach wird J(I) = J(I) + 1 gesetzt. Diese Antwort wird an den Dialog-Stepper 16 zurückgegeben. Wenn der zurückgegebene Wert des Dialog-Steppers 16 eine Lösung ist, dann wird eine Kante von der Frage I zu der Lösung gezeichnet, dabei wird idealerweise der gewählte Antwortwert J(I) an der Kante aufgetragen, die Lösung wird an das Ende der Kante gezeichnet. Wenn der zurückgegebene Wert eine Frage ist, wird eine Kante von der Frage I zu der Frage I+1 gezeichnet, idealerweise wird der gewählte Antwortwert J(I) an der Kante aufgetragen. Dann wird die Frage I+1 an das Ende der Kante gezeichnet und I = I+1 gesetzt. Wenn es keine weitere Frage oder Lösung mehr gibt, wird I auf I=I-1 reduziert. Zum Ende der Bearbeitung für alle I,J wird der Entscheidungsbaum für alle I idealerweise von oben nach unten und für die jeweiligen Antworten J(I) von links nach rechts aufgetragen.

Das in Figur 1 gezeigte System ist somit dazu ausgebildet, eine zum Lösen eines technischen Problems geeignete Dialogstruktur zu generieren, und dabei die Dialogstruktur unter Berücksichtigung mindestens eines optimierenden Aspekts aus Fragen und Antworten, die zum Lösen des Problems bereitgestellt sind, derart automatisch zu generieren oder zu strukturieren, dass mindestens ein durch die Dialogstruktur festgelegter Dialogpfad bei der Lösung des Problems in einer möglichst kurzen Zeit durchlaufen wird.

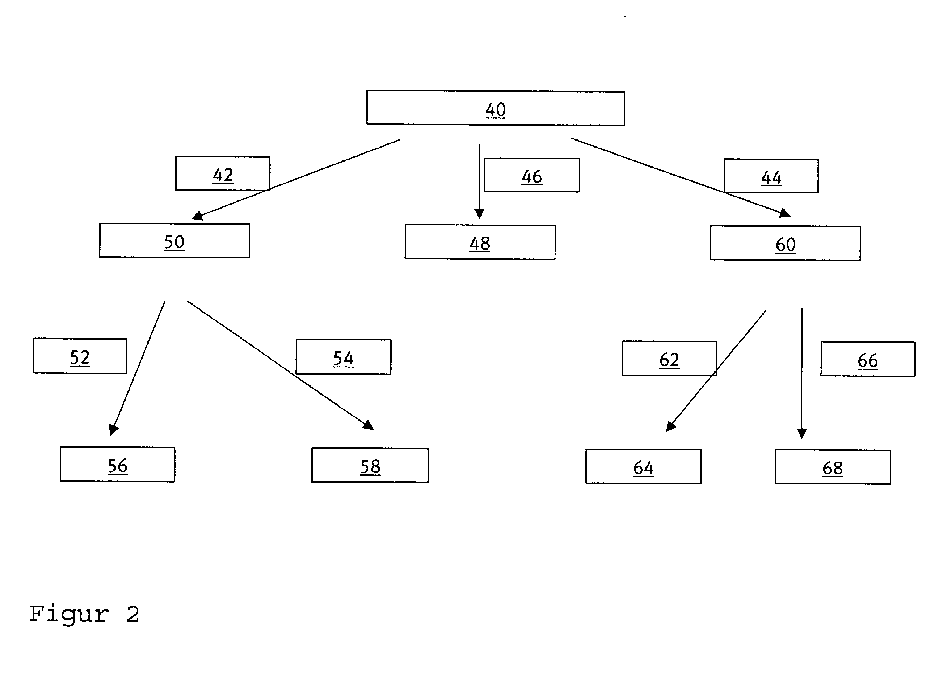

Das in Figur 2 gezeigte Ausführungsbeispiel eines mittels der Erfindung bereitgestellten Entscheidungsbaums bezieht sich auf ein als Drucker ausgebildetes Endgerät, wobei das Problem darin besteht, dass der Drucker nicht druckt. Hierzu wird im Rahmen einer durch den Entscheidungsbaum begleiteten Dialogführung zu Beginn eine erste Frage 40 gestellt. Die erste Frage 40 lautet: "Zeigen Bildschirm - oder Drukkerdisplay eine Fehlermeldung an?". Hierzu sind drei Antworten 42, 44, 46 vorgesehen. Gemäß der ersten Antwort 42 zeigt der Bildschirm eine Fehlermeldung an. Gemäß der zweiten Antwort 44 zeigt das Drucker-Display eine Fehlermeldung an. Gemäß einer dritten Antwort 46 zeigen weder der Bildschirm noch das Drucker-Display eine Fehlermeldung an. Aus dieser dritten Antwort 46 resultiert die zweite Frage 48: "Ist der Drucker angeschaltet?". Diese dritte Frage 48 führt auf eine erste Lösung des Problems, wonach der Drukker einfach einzuschalten wäre. Das bedeutet, dass die Lösung durch die Frage impliziert wird.

Der ersten Antwort 42 folgend ist eine dritte Frage 50 zu stellen. Diese besagt: "Welche der folgenden Meldungen wird angezeigt?". Hierzu sind zwei Antworten 52, 54 denkbar. Eine vierte Antwort 52 lautet: "Der Drucker ist nicht erreichbar". Daraus resultiert eine vierte Frage 56: "Ist das ein Netzwerkdrucker?". Diese vierte Frage 56 stellt implizit eine Lösung des Problems dar, falls der Drucker gar nicht mit dem Netzwerk verbunden ist, bedeutet das naheliegenderweise, dass ein Ausdrucken auf diesem Druck über das Netzwerk nicht möglich ist. Die fünfte Antwort 54 auf die dritte Frage 50 lautet: "Drucker ist nicht bekannt." Diese Antwort 54 stellt sich innerhalb des Entscheidungsbaums die fünfte Frage 58: "Haben Sie schon einmal auf diesem Drucker gedruckt?". Diese fünfte Frage 58 legt implizit die Lösung nahe, dass der Drucker bspw. nicht installiert ist, ein Drucken wäre erst nach erfolgreicher Installation möglich.

Falls die erste Frage 40 mit der zweiten Antwort 44 beantwortet wird, wonach das Drucker-Display eine Fehlermeldung anzeigt, stellt sich innerhalb des Entscheidungsbaums eine sechste Frage 60: "Welche der folgenden Meldungen wird angezeigt?". Gemäß einer sechsten Antwort 62 auf diese sechste Frage 60 fehlt Papier. Daraus resultiert die siebte Frage 64: "Hilft Papiernachlegen?". Diese siebte Frage 64 legt demnach implizit die Lösung nahe, dass in dem Drucker Papier nachzulegen wäre. Falls die sechste Frage 60 mit einer siebten Antwort 66 beantwortet wird, die besagt, dass kein Toner mehr vorhanden ist, stellt sich auf dieser siebten Antwort 66 basierend die achte Frage 68: "Ist der Toner leer?". Diese achte Frage 68 legt als weitere implizite Lösung nahe, dass der Toner des Druckers zu erneuern wäre.

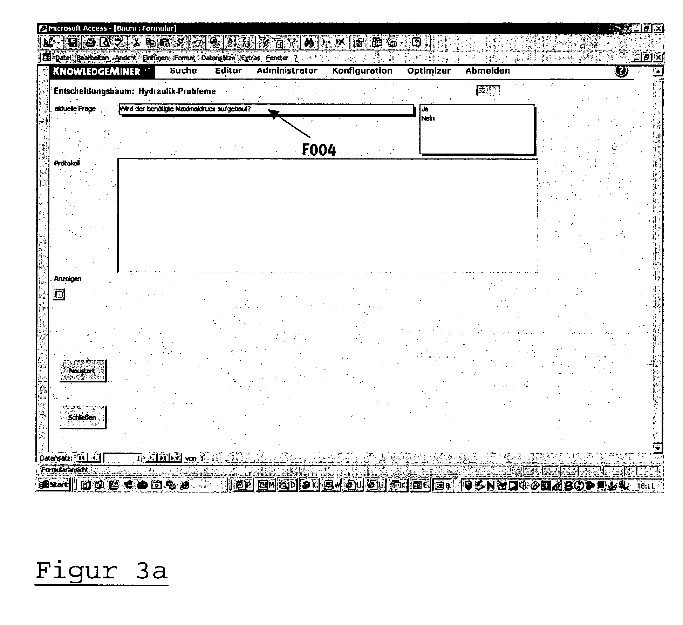

In den Figuren 3a bis 3f sind Benutzeroberflächen abgebildet, anhand derer ein Ausführungsbeispiel zur Bereitstellung eines Entscheidungsbaums beschrieben wird, wobei die Figuren 3a bis 3g nacheinander durchlaufen werden. Die Bezugszeichen für gleiche Frage- und Lösungsnummern werden figurenübergreifend verwendet.

Als technisches Gerät, für das ein Problem zu lösen ist, wird in dem Ausführungsbeispiel ein Hydrauliksystem betrachtet. In Hydrauliksystemen tritt zuweilen das Problem auf, dass die Bewegungskraft der darin bewegten Elemente nachlässt. Dies kann an verschiedenen Ursachen liegen, entsprechend unterscheiden sich die Abhilfemaßnahmen.

Für diese Situation soll nun eine Dialogstruktur und darauf basierend ein Entscheidungsbaum angelegt werden. Allerdings berücksichtigt dieses Ausführungsbeispiel nur einen Teil der Varianten und Möglichkeiten, die sich bei Durchführung der Erfindung ergeben und vermittelt demnach nur ein grundsätzliches Verständnis der Funktionalität.

Zuerst wird ein Name des Entscheidungsbaums definiert: Hydraulik-Probleme. Dann werden Lösungen und Fragestellungen bestimmt. Oft besteht ein Problem des Hydraulikkreislaufs darin, dass Luft in den Hydraulikkreislauf kommt. Da die Luft zusammengepresst werden kann, gibt diese nach und eine Kraft an den durch die Luft bewegten Elementen des Hydraulikkreislaufs reduziert sich. Meistens kann man das ganz gut daran erkennen, dass die Bewegung der bewegten Elemente auch etwas verzögert reagiert. Zur Abhilfe ist die Luft zu entfernen.

In manchen Fällen kommt es vor, dass der Hydraulikkreislauf undicht ist. Dann reduziert sich die erreichbare Maximalkraft. Zudem sind oft Leckstellen erkennbar. Es kann natürlich auch sein, dass das Pumpsystem des Hydraulikkreislaufs defekt ist und nicht mehr der maximale Druck aufgebaut wird. Dann ist das Pumpsystem auszutauschen. Aber auch das Antriebssystem kann defekt sein und nicht mit der notwendigen Drehzahl laufen.

Der Inhalt der Entscheidungsbaumdatenbank gemäße Tabelle 1 ist dann:

**Tabelle 1**

| Name des Entscheidungsbaums | Einstiegsfrage | Kommentare und Anweisungen |
|---|---|---|
| Hydraulik-Probleme | | |

Der Inhalt der Lösungsdatenbank gemäß Tabelle 2 ist dann:

**Tabelle 2**

| Lösungsnummer | Lösung | Kostenklasse | Relative Kosten |
|---|---|---|---|
| L001 | Entlüften des Hydraulik-Kreislaufes | | |
| L002 | Abdichten der Leckstellen | | |
| L003 | Erneuern des Pumpsystems | | |
| L004 | Erneuern des Antriebssystems | | |

Der Inhalt der Fragendatenbank gemäß Tabelle 3 ist dann:

**Tabelle 3**

| Fragenummer | Frage |
|---|---|
| F001 | Besteht innerhalb des Pumpsystems der geforderte Arbeitsdruck? |
| F002 | Reagiert der Hydraulikkreislauf verzögert? |
| F003 | Sind Leckstellen erkennbar? |
| F004 | Wird der benötigte Maximaldruck aufgebaut? |
| F005 | Wird die notwendige Drehzahl erreicht? |

Der Inhalt der Abhängigkeitsdatenbank gemäß Tabelle 4 ist dann:

**Tabelle 4**

| Lösungsnummer | Fragenummer | Abhängigkeitsnummer | Abhängigkeitswert | Kontrollfrage |
|---|---|---|---|---|
| L001 | F002 | 002 | Ja | |
| L001 | F004 | 004 | Ja | |
| L002 | F003 | 003 | Ja | |
| L002 | F004 | 004 | Nein | |
| L003 | F001 | 001 | Nein | |
| L003 | F004 | 004 | Nein | |
| L004 | F001 | 001 | Ja | |
| L004 | F004 | 004 | Nein | |
| L004 | F005 | 005 | Nein | |

Der Inhalt der Dialoglogikdatenbank gemäß Tabelle 5 ist dann

**Tabelle 5**

| Frage nummer | Bezogene Frage nummer | Nicht mehr benötigte Abhängigkeitsnummer | Beziehung der bezogenen Frage zur Ausgangsfrage | Nummer der eingegebenen Abhängigkeit | Wert der eingegebenen Abhängigkeit | Nummer der impliziten Abhängigkeit | Wert der impliziten Abhängigkeit |
|---|---|---|---|---|---|---|---|
| F004 | F005 | | Unbedingte Folgefrage | | | | |
| F004 | F001 | | Implizite Abhängigkeit | 004 | Ja | 001 | Ja |

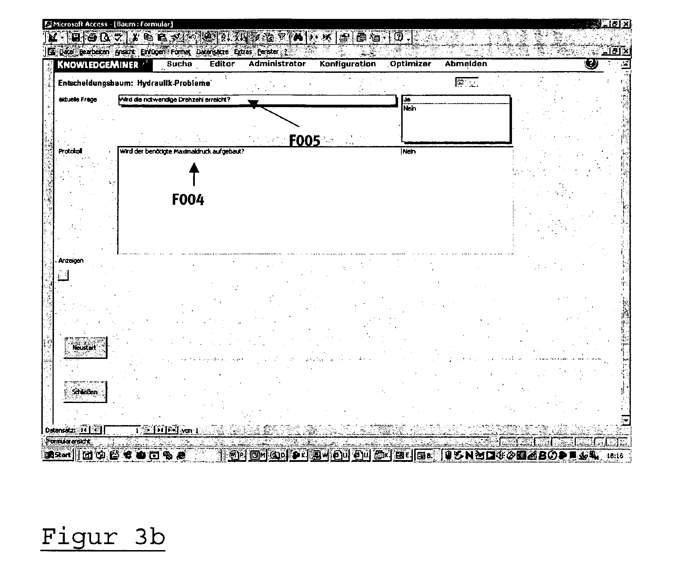

In dieser Reihenfolge wird also ausgedrückt, dass nach der Frage "Wird der benötigte Maximaldruck aufgebaut?", vgl. Benutzeroberfläche aus Figur 3a, die Frage "Wird die notwendige Drehzahl erreicht?", vgl. Figur 3b, gestellt wird.

Hier könnte beispielsweise der Grund bestehen, dass sich Drehzahlmesser und Manometer nahe beieinander finden und es sich daher anbietet, bei der Messung des Einen sofort auch das Andere zu messen.

Der Inhalt der Lerndatenbank gemäß Tabelle 6 ist dann:

**Tabelle 6**

| Lösungsnummer | Lösungshäufigkeit |
|---|---|
| L001 | 1 |
| L002 | 1 |
| L003 | 1 |
| L004 | 1 |

Nachfolgend ein Beispiel für die Abarbeitung der Fragen und Lösungen:

Zu Beginn wird der Wahrscheinlichkeitsgradient der Fragen kalkuliert. Frage F004 weist den höchsten Wahrscheinlichkeitsgradienten von 4 auf. Daher wird sie als erstes angezeigt.

Nehmen wir an, der maximale Druck wird nicht aufgebaut, die Frage wird also mit "Nein" beantwortet, vgl. Figur 3b. Für Frage F004 ist die Frage F005 als unbedingte Folgefrage definiert. Also wird nun Frage F005 gestellt, wiewohl ihr Wahrscheinlichkeitsgradient nur bei 1 liegt. Diese Frage wird nun mit "Ja" beantwortet.

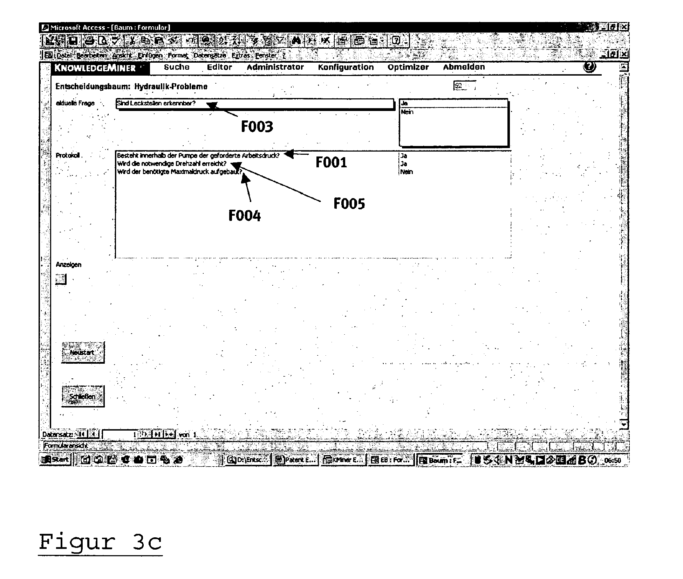

Die restlichen Fragen weisen nun nur noch alle einen Wahrscheinlichkeitsgradienten von 1 auf. Es sei in diesem Kontext angenommen, dass das System nach dem Arbeitsdruck in der Pumpe fragt. Diese Frage wird mit "Ja" beantwortet, da der geforderte Arbeitsdruck in der Pumpe besteht, vgl. Figur 3c.

Entsprechend fragt das System nun nach eventuellen Leckstellen, vgl. Figur 3c. Wir nehmen an, dass tatsächlich eine Leckstelle gefunden wird. Das System schlägt dann die Beseitigung der Leckstelle vor.

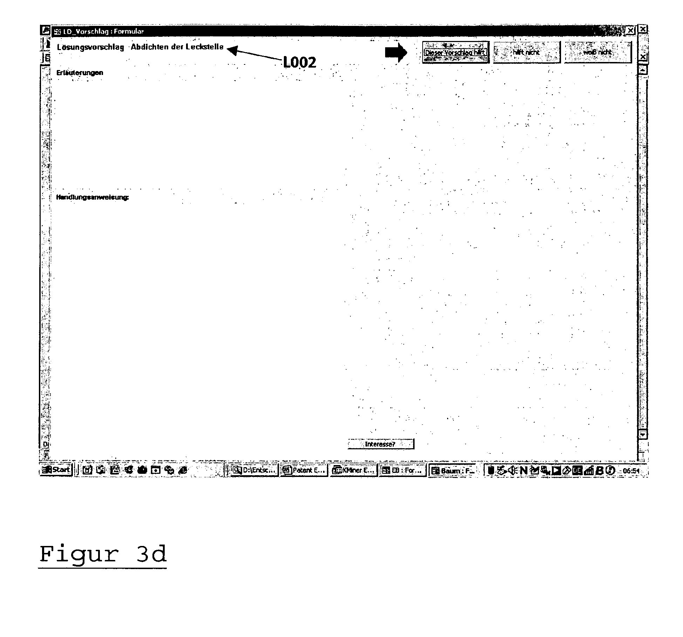

Diese Lösung wird nun erfolgreich angewandt, so dass in der Lerndatenbank Lösungsnummer L002 die Häufigkeit 2 erhält, vgl. Figur 3d.

Wird der Entscheidungsbaum nun wiederholt ausgeführt, hat sich der Wahrscheinlichkeitsgradient der Frage F003 erhöht.

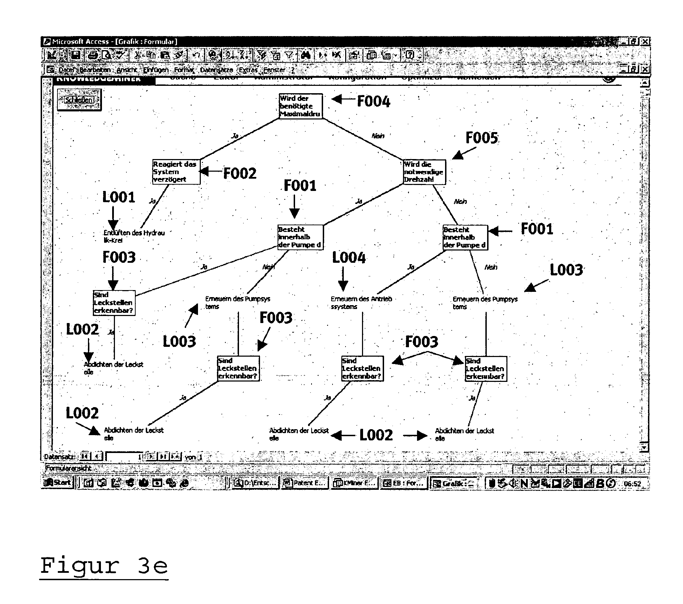

Die grafische Darstellung des in Figur 3e gezeigten Entscheidungsbaumes zeigt den durchgeführten Dialog vor der erfolgreichen Lösung L002, wonach die Leckstelle abzudichten ist, an.

Zu Beginn des Entscheidungsbaums aus Figur 3e steht die Frage F004. Wird diese mit Ja beantwortet, folgt die Frage F002 und darauf nach positiver Beantwortung die Lösung L001, die zu einem Entlüften des Hydraulikkreislaufes rät. Bei negativer Antwort auf die Frage F004, folgt die Frage F005 und darauf unabhängig davon, ob mit Ja oder Nein geantwortet wird, die Frage F001.

In der Ja-Verzweigung folgt auf die Frage F001 bei positiver Antwort die Frage F003 und darauf die Lösung L001 "Abdichten des Hydraulik-Kreislaufes". Falls in dieser Ja-Verzweigung auf Frage F001 mit Nein geantwortet wird, folgt Lösung L003, wonach das Pumpsystem zu erneuern ist. Hier wird jedoch angenommen, dass diese Lösung L003 nicht erfolgreich ist. Somit stellt sich die Frage F003, auf die ebenfalls die erfolgreiche Lösung L002 folgt.

Für den Fall, dass die Frage F005 negativ beantwortet wird und die Frage F001 in der Nein-Verzweigung gestellt wird, kann entweder die Antwort Ja oder Nein folgen. Bei Ja kommt es zu der Lösung L004 "Erneuern des Antriebssystems", die hier als erfolglos angenommen wird. Bei Nein kommt es zu einer Lösung L003, "Erneuern des Pumpsystems", die ebenfalls als erfolglos angenommen wird. In beiden Fällen wird nun jeweils die Frage F003 "Sind Leckstellen erkennbar?" gestellt, worauf jeweils die hier als erfolgreich angenommene Lösung L002 folgt, wonach Leckstellen abzudichten sind.

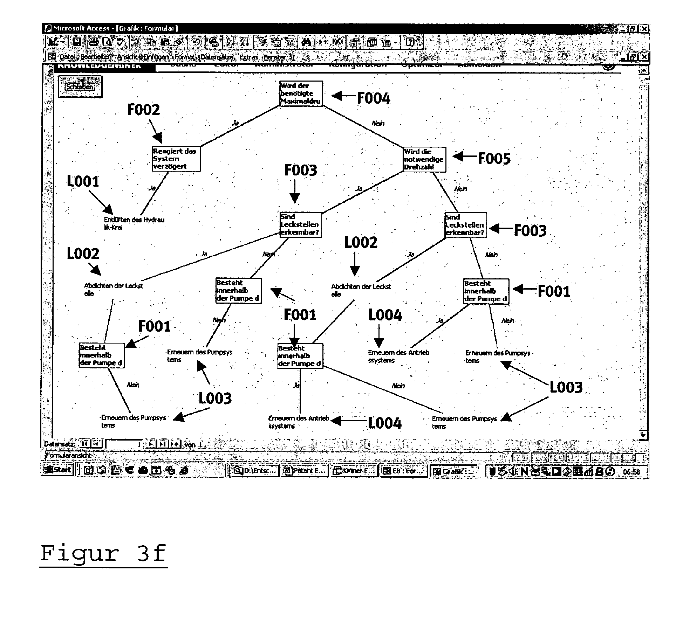

Nach der erfolgreichen Anwendung der Lösung L002, wonach die Leckstellen abzudichten sind, hat sich der Entscheidungsbaum gemäß Figur 3f verändert.

Zu Beginn des Entscheidungsbaums aus Figur 3f steht die Frage F004. Wird diese mit Ja beantwortet, folgt die Frage F002 und darauf nach positiver Beantwortung die erfolgreiche Lösung L001. Bei negativer Antwort auf die Frage F004, folgt die Frage F005 und darauf unabhängig davon, ob mit Ja oder Nein geantwortet wird, die Frage F003.

Falls die Frage F005 mit Ja beantwortet wird, folgt bei positiver Beantwortung von Frage F003 die hier als erfolglos angenommene Lösung L002, auf welche die weitere Frage F001 folgt, auf die die hier erfolgreiche Lösung L003 folgt, somit muss das Pumpsystem erneuert werden. Wird die Frage F003 mit Nein beantwortet, stellt sich die Frage F001, auf die ebenfalls die erfolgreiche Lösung L003 folgt.

Für den Fall, dass die Frage F005 negativ beantwortet wird und die Frage F003 in der Nein-Verzweigung gestellt wird, kann entweder die Antwort Ja oder Nein folgen. Bei Ja kommt es zu der hier als erfolglos angenommenen Lösung L002 "Abdichten der Leckstelle", auf die die Frage F001 folgt. Wird diese positiv beantwortet, kommt es zu der Lösung L004, wonach das Antriebssystem erneuert werden muss. Lautet die Antwort auf Frage F001 jedoch Nein, so wäre nach der Lösung L003 das Pumpsystem zu erneuern.

Wird nach negativer Beantwortung von Frage F005 Frage F003 gestellt, stellt sich nach negativer Beantwortung dieser Frage F003 die Frage F001. Wird diese positiv beantwortet, ergibt sich die hier als erfolgreich angenommene Lösung L004, gemäß der das Antriebssystem zu erneuern ist. Wird auf Frage F001 in dieser Verzweigung mit Nein geantwortet, ergibt sich auch hier die Lösung L003 "Erneuern des Pumpsystems".

## Patentansprüche

1. Verfahren zum Lösen eines technischen Problems mittels einer Dialogstruktur, wobei die Dialogstruktur unter Berücksichtigung mindestens eines optimierenden Aspekts aus Fragen und Antworten, die zum Lösen des Problems bereitgestellt werden, derart automatisch strukturiert wird, dass mindestens ein durch die Dialogstruktur festgelegter Dialogpfad bei der Lösung des Problems in einer möglichst kurzen Zeit durchlaufen wird.

2. Verfahren nach Anspruch 1, bei dem die Dialogstruktur aus gegenseitigen Abhängigkeiten der Fragen und Antworten generiert wird.

3. Verfahren nach Anspruch 1 oder 2, bei dem die Dialogstruktur anhand einer Logik als der mindestens eine optimierende Aspekt strukturiert wird.

4. Verfahren nach Anspruch 3, bei dem mit der Logik faktische Abhängigkeiten der Lösungen und Fragen sowie eine Reihenfolge der zu stellenden Fragen berücksichtigt werden.

5. Verfahren nach einem der voranstehenden Ansprüche, bei dem als der mindestens eine optimierende Aspekt eine Erfolgsquote der Lösung berücksichtigt wird.

6. Verfahren nach einem der voranstehenden Ansprüche, bei dem als der mindestens eine optimierende Aspekt ein zu berechnender Wahrscheinlichkeitsgradient verwendet wird.

7. Verfahren nach einem der voranstehenden Ansprüche, bei dem mit dem mindestens einen optimierenden Aspekt Kosten der Lösung berücksichtigt werden.

8. Verfahren nach einem der voranstehenden Ansprüche, bei dem die Dialogstruktur bei einer Generierung auf der Basis automatisch gesammelter Lerndaten automatisch optimiert wird und damit eine optimale Dialogstruktur sichergestellt wird.

9. Verfahren nach einem der voranstehenden Ansprüche, bei dem mit der Dialogstruktur mindestens ein Entscheidungsbaum, der miteinander verbundene Fragen und Antworten zum Lösen des Problems umfasst, bereitgestellt wird.

10. Verfahren nach einem der voranstehenden Ansprüche, bei dem anhand der Dialogstruktur eine Dialogführung zum Lösen des Problems bereitgestellt wird.

11. Verfahren nach einem der voranstehenden Ansprüche, das zum Beheben eines Defekts in einer Einrichtung dient.

12. System, das dazu ausgebildet ist, eine zum Lösen eines technischen Problems geeignete Dialogstruktur zu generieren, und dabei die Dialogstruktur unter Berücksichtigung mindestens eines optimierenden Aspekts aus Fragen und Antworten, die zum Lösen des Problems bereitgestellt sind, derart automatisch zu strukturieren, dass mindestens ein durch die Dialogstruktur festgelegter Dialogpfad bei der Lösung des Problems in einer möglichst kurzen Zeit durchlaufen wird.

13. System nach Anspruch 12, das als Komponenten mindestens ein Modul sowie mindestens eine Datenbank aufweist.

14. System nach Anspruch 13, das als das mindestens eine Modul einen Dialog-Stepper (16) aufweist, der dazu ausgebildet ist, die Dialogstruktur unter Berücksichtigung des mindestens einen optimierenden Aspekts zu generieren.

15. System nach Anspruch 13 oder 14, das als das mindestens eine Modul ein Generierungsmodul (18) aufweist, das dazu ausgebildet ist, einen Entscheidungsbaum grafisch darzustellen.

16. Computerprogramm mit Programmcodemitteln, um alle Schritte eines Verfahrens nach einem der Ansprüche 1 bis 11 durchzuführen, wenn das Computerprogramm auf einem Computer oder einer entsprechenden Recheneinheit, insbesondere in einem System nach einem der Ansprüche 12 bis 15, ausgeführt wird.

17. Computerprogrammprodukt mit Programmcodemitteln, die auf einem computerlesbaren Datenträger gespeichert sind, um alle Schritte eines Verfahrens nach einem der Ansprüche 1 bis 11 durchzuführen, wenn das Computerprogramm auf einem Computer oder einer entsprechenden Recheneinheit, insbesondere in einem System nach einem der Ansprüche 12 bis 15, ausgeführt wird.

## Geänderte Patentansprüche

### Geänderte Patentansprüche gemäss Regel 137(2) EPÜ.

**1.** Verfahren zum Beheben eines Defekts in einer Einrichtung mittels einer Dialogstruktur, wobei die Dialogstruktur unter Berücksichtigung mindestens eines optimierenden Aspekts aus Fragen und Antworten, die zum Beheben des Defekts bereitgestellt werden, automatisch strukturiert wird, wobei die Fragen und Antworten derart automatisch organisiert werden, dass in Abhängigkeit einer Erfolgsquote von Lösungen zum Beheben des Defekts die notwendige Anzahl Fragen bis zum Finden einer passenden Lösung minimal ist.

**2.** Verfahren nach Anspruch 1, bei dem die Dialogstruktur aus gegenseitigen Abhängigkeiten der Fragen und Antworten generiert wird.

**3.** Verfahren nach Anspruch 1 oder 2, bei dem die Dialogstruktur anhand einer Logik als der mindestens eine optimierende Aspekt strukturiert wird.

**4.** Verfahren nach Anspruch 3, bei dem mit der Logik faktische Abhängigkeiten der Lösungen und Fragen sowie eine Reihenfolge der zu stellenden Fragen berücksichtigt werden.

**5.** Verfahren nach einem der voranstehenden Ansprüche, bei dem als der mindestens eine optimierende Aspekt ein zu berechnender Wahrscheinlichkeitsgradient verwendet wird.

**6.** Verfahren nach einem der voranstehenden Ansprüche, bei dem mit dem mindestens einen optimierenden Aspekt Kosten der Lösung berücksichtigt werden.

**7.** Verfahren nach einem der voranstehenden Ansprüche, bei dem die Dialogstruktur bei einer Generierung auf der Basis automatisch gesammelter Lerndaten automatisch optimiert wird und damit eine optimale Dialogstruktur sichergestellt wird.

**8.** Verfahren nach einem der voranstehenden Ansprüche, bei dem mit der Dialogstruktur mindestens ein Entscheidungsbaum, der miteinander verbundene Fragen und Antworten zum Lösen des Problems umfasst, bereitgestellt wird.

**9.** Verfahren nach einem der voranstehenden Ansprüche, bei dem anhand der Dialogstruktur eine Dialogführung zum Lösen des Problems bereitgestellt wird.

**10.** System, das dazu ausgebildet ist, eine zum Beheben eines Defekts in einer Einrichtung geeignete Dialogstruktur zu generieren, und dabei die Dialogstruktur unter Berücksichtigung mindestens eines optimierenden Aspekts aus Fragen und Antworten, die zum Lösen des Problems bereitgestellt sind, automatisch zu strukturieren, wobei die Fragen und Antworten derart automatisch organisiert werden, dass in Abhängigkeit einer Erfolgsquote von Lösungen zum Beheben des Defekts die notwendige Anzahl Fragen bis zum Finden einer passenden Lösung minimal ist.

**11.** System nach Anspruch 10, das als Komponenten mindestens ein Modul sowie mindestens eine Datenbank aufweist.

**12.** System nach Anspruch 11, das als das mindestens eine Modul einen Dialog-Stepper (16) aufweist, der dazu ausgebildet ist, die Dialogstruktur unter Berücksichtigung des mindestens einen optimierenden Aspekts zu generieren.

**13.** System nach Anspruch 11 oder 12, das als das mindestens eine Modul ein Generierungsmodul (18) aufweist, das dazu ausgebildet ist, einen Entscheidungsbaum grafisch darzustellen.

**14.** Computerprogramm mit Programmcodemitteln, um alle Schritte eines Verfahrens nach einem der Ansprüche 1 bis 9 durchzuführen, wenn das Computerprogramm auf einem Computer oder einer entsprechenden Recheneinheit, insbesondere in einem System nach einem der Ansprüche 10 bis 13, ausgeführt wird.

**15.** Computerprogrammprodukt mit Programmcodemitteln, die auf einem computerlesbaren Datenträger gespeichert sind, um alle Schritte eines Verfahrens nach einem der Ansprüche 1 bis 9 durchzuführen, wenn das Computerprogramm auf einem Computer oder einer entsprechenden Recheneinheit, insbesondere in einem System nach einem der Ansprüche 10 bis 13, ausgeführt wird.
